(19)

Europäisches
Patentamt
European
Patent Office
Office européen
des brevets

(11) **EP 2 725 434 A1**

(12) **EUROPEAN PATENT APPLICATION**

(43) Date of publication:
**30.04.2014 Bulletin 2014/18**

(51) Int Cl.:
***G05B 5/01*** *(2006.01)*

(21) Application number: **13185896.1**

(22) Date of filing: **25.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.10.2012 JP 2012237513**

(71) Applicant: **OMRON CORPORATION
Kyoto-shi, Kyoto 600-8530 (JP)**

(72) Inventors:
- **Yamada, Takaaki
  Kyoto, Kyoto 600-8530 (JP)**
- **Hosokawa, Hirofumi
  Kyoto, Kyoto 600-8530 (JP)**

(74) Representative: **Horn Kleimann Waitzhofer
Ganghoferstrasse 29a
80339 München (DE)**

(54) **Feedback control method, feedback control apparatus, and feedback control program**

(57)  The present invention provides a feedback control method, a feedback control apparatus, and a feedback control program realizing increased capability of following a target value while avoiding saturation of a manipulated value. The invention provides a feedback control method for determining a manipulated value to be output to a control target so that a process value obtained from the control target matches a target value. The feedback control method includes: a step of filtering the target value with a filter having a low-pass characteristic; a step of determining the manipulated value in accordance with a deviation between the target value that has been filtered and the process value; and a step of delaying change rate of the target value that has been filtered in accordance with at least one of a fact that the target value is changed and a fact that the determined manipulated value deviates from a predetermined permissible range or approaches the permissible range.

*FIG. 8A*

EP 2 725 434 A1

**(Cont. next page)**

# FIG. 8B

**Description**

BACKGROUND OF THE INVENTION

TECHNICAL FIELD

The present invention relates to a feedback control method, a feedback control apparatus, and a feedback control program for determining a manipulated value which is output to a control target so that a process value obtained from the control target matches a target value.

RELATED ART

At present, a feedback control system such as a PID control system is used for various purposes such as temperature control, speed control, and position control. In such a feedback control system, a manipulated value for a control target is continuously calculated so that a process value obtained from the control target follows a target value which is set.

As such a feedback control system, a two-degree-of-freedom control system capable of independently controlling a target value characteristic and a feedback characteristic is known (for example, pp. 69 to 106 of non-patent literature 1). An example of such a two-degree-of-freedom control system is a two-degree-of-freedom PID control system of a target value filter type. In the two-degree-of-freedom PID control system of the target value filter type, a target value is supplied to a target value filter, and PID control is performed on the deviation calculated between the value that has been filtered and a process value. In such a two-degree-of-freedom PID control system of the target value filter type, the time constant of the target value filter and the integration time constant of the PID control system are set to the same value.

Generally, the time constant of the PID control system is determined in consideration of the time constant of a control target and the like. However, in the case where the difference between a newly set target value and a process value of the control target is large, a manipulated value which is output to the control target is saturated. As an example, temperature control of an industrial furnace will be considered. In the case of setting a normal operation temperature (for example, 1000°) as a target value in a state where an industrial furnace is cooled to room temperature, the difference between the target value and a present process value is large, so that time required to increase the temperature to the target value may become longer than the time constant of a target value filter. Due to this, before the process value of the control target becomes close to the target value, the value output from the target value filter reaches the input target value, and an integration value in an integration element of the PID control system becomes excessive. As a result, the manipulated value on the control target (for example, a heater) is saturated. Once the manipulated value is saturated, even when the process value of the control target becomes close to the target value, the excessive manipulated value is continuously output. As a result, so-called overshoot occurs in the process value of the control target.

SUMMARY

The present invention has been devised to solve the problems described and an object thereof is to provide a feedback control method, a feedback control device, and a feedback control program realizing improved capability of following a target value while avoiding saturation of a manipulated value.

In accordance with one aspect of the present invention, there is provided a feedback control method for determining a manipulated value which is output to a control target so that a process value obtained from the control target matches a target value. A feedback control method includes: a step of filtering the target value with a filter having a low-pass characteristic; a step of determining the manipulated value in accordance with a deviation between the target value that has been filtered and the process value; and a step of delaying change rate of the target value that has been filtered in accordance with at least one of a fact that the target value is changed and a fact that the determined manipulated value deviates from a predetermined permissible range or approaches the permissible range.

Preferably, in the delaying step, when the target value is changed, a time constant of the filter is made longer in accordance with size of a change amount of the target value.

More preferably, the feedback control method further includes a step of accepting setting/changing of the time constant of the filter.

More preferably, the feedback control method further includes a step of displaying a value of the time constant of the filter that is set.

Preferably, in the delaying step, even in the case where the target value is changed, when the change amount of the target value is smaller than a predetermined value, the time constant of the filter is maintained.

Preferably, the delaying step includes a step of suppressing change rate of the target value that has been filtered while the determined manipulated value deviates from the permissible range.

Preferably, the delaying step includes a step of maintaining the target value that has been filtered at a value before the deviation while the determined manipulated value deviates from the permissible range.

Preferably, the delaying step includes a step of detecting approach to the permissible range based on the change rate of the determined manipulated value and allowance for limit of the permissible range.

According to another aspect of the present invention, there is provided a feedback control method for determining a manipulated value to be output to a control target so that a process value obtained from the control target matches a target value. The feedback control method includes: a step of filtering the target value with a filter having a low-pass characteristic; a step of determining the manipulated value in accordance with a deviation between the target value that has been filtered and the process value; and a step of calculating a filter time constant as a time constant of the filter by filter time constant = integration time constant $T_I$ × coefficient k in relation to a coefficient k and an integration time constant $T_I$ of a control system including an integration element for determining the manipulated value.

Preferably, the feedback control method further includes a step of accepting setting/changing of the coefficient k.

Preferably, the feedback control method further includes a step of displaying a value of the coefficient k which is set.

According to further another aspect of the present invention, there is provided a feedback control apparatus for determining a manipulated value to be output to a control target so that a process value obtained from the control target matches a target value. The feedback control apparatus includes: a filter configured to filter the target value and having a low-pass characteristic; a control unit configured to determine the manipulated value in accordance with a deviation between the target value that has been filtered and the process value; and an adjusting unit configured to delay change rate of the target value that has been filtered in accordance with at least one of a fact that the target value is changed and a fact that the determined manipulated value deviates from a predetermined permissible range or approaches the permissible range.

Preferably, when the target value is changed, the adjusting unit is configured to cause a time constant of the filter to be longer in accordance with size of the change amount of the target value.

More preferably, the apparatus further includes a setting section configured to accept setting/changing of the time constant of the filter.

More preferably, the apparatus further includes a display section configured to display a value of the time constant of the filter that is set.

Preferably, even in the case where the target value is changed, when the change amount of the target value is smaller than a predetermined value, the adjusting unit is configured to maintain the time constant of the filter.

Preferably, the adjusting unit is configured to suppress change rate of the target value that has been filtered while the determined manipulated value deviates from the permissible range.

Preferably, the adjusting unit is configured to maintain the target value that has been filtered at a value before the deviation while the determined manipulated value deviates from the permissible range.

Preferably, the adjusting unit is configured to detect approach to the permissible range based on the change rate of the determined manipulated value and allowance for limit of the permissible range.

According to further another aspect of the present invention, there is provided a feedback control apparatus for determining a manipulated value to be output to a control target so that a process value obtained from the control target matches a target value. The feedback control apparatus includes: a filter configured to filter the target value and having a low-pass characteristic; a control unit configured to determine the manipulated value in accordance with a deviation between the target value that has been filtered and the process value; and a setting section configured to calculate a filter time constant as a time constant of the filter by filter time constant = integration time constant $T_I$ × coefficient k in relation to a coefficient k and an integration time constant $T_I$ of a control system comprising an integration element for determining the manipulated value.

Preferably, the setting section accepts setting/changing of the coefficient k.

Preferably, the setting section displays a value of the coefficient k which is set.

According to further another aspect of the present invention, there is provided a feedback control program for determining a manipulated value to be output to a control target so that a process value obtained from the control target matches a target value. The feedback control program causes a computer to execute: a step of filtering the target value with a filter having a low-pass characteristic; a step of determining the manipulated value in accordance with a deviation between the target value that has been filtered and the process value; and a step of delaying change rate of the target value that has been filtered in accordance with at least one of a fact that the target value is changed and a fact that the determined manipulated value deviates from a predetermined permissible range or approaches the permissible range.

According to the present invention, saturation of a manipulated value is avoided, and capability of following a target value can be increased.

BRIEF DESCRIPTION OF THE DRAWINGS

Fig. 1 is a schematic diagram illustrating a general configuration of a feedback control system including a control device according to an embodiment;

Fig. 2 is a schematic diagram illustrating a configuration of the control device according to the embodiment;

Fig. 3 is a schematic diagram illustrating a general configuration of a feedback control system including a control device according to a related art of the embodiment;

Fig. 4 is a control block diagram expressing, by elements, the feedback control system including the control device according to the related art of the embodiment;

Fig. 5 is a diagram illustrating an example of a simulation result in a general two-degree-of-freedom PID control system of a target value filter type;

Figs. 6A and 6B are schematic diagrams each illustrating a general configuration of a feedback control system including a control device according to an embodiment of the invention;

Fig. 7 is a schematic diagram illustrating a general configuration of a feedback control system including a control device according to an embodiment of the invention;

Figs. 8A and 8B are conceptual diagrams for explaining process of changing a time constant Tf of a target value filter in a control device according to a first embodiment;

Figs. 9A and 9B are diagrams illustrating an example of setting related to the process of changing the time constant Tf of the target value filter in the control device according to the first embodiment;

Fig. 10 is a diagram illustrating an example of a simulation result in a two-degree-of-freedom PID control system of a target value filter type according to the first embodiment;

Fig. 11 is a diagram illustrating another example of setting related to the process of changing the time constant Tf of the target value filter in the control device according to the first embodiment;

Fig. 12 is a flowchart illustrating procedures executed in the control device according to the first embodiment;

Figs. 13A to 13D are conceptual diagrams for explaining a filtering changing process in a target value filter in a control device according to a second embodiment;

Fig. 14 is a diagram illustrating an example of a simulation result in a two-degree-of-freedom PID control system of a target value filter type according to the second embodiment;

Fig. 15 is a conceptual diagram for explaining process of predicting a manipulated value in the control device according to the second embodiment; and

Fig. 16 is a flowchart illustrating procedures executed in the control device according to the second embodiment.

DETAILED DESCRIPTION

Embodiments of the present invention will be described in detail with reference to the drawings. The same reference numerals are designated to the same or corresponding parts in the diagrams and their description will not be repeated.

A. Feedback Control System

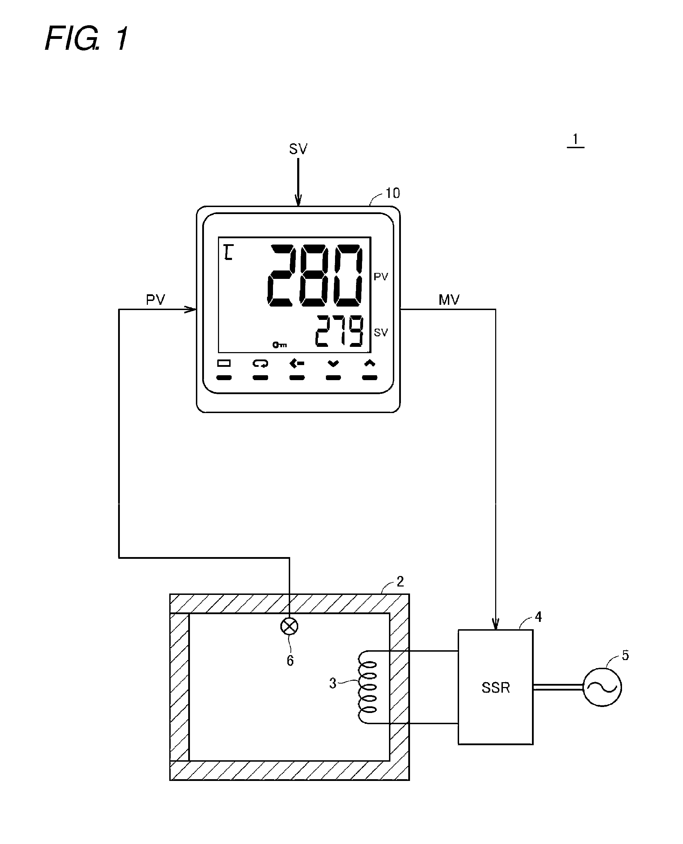

First, a feedback control system 1 including a control device 10 according to an embodiment of the invention will be described. Fig. 1 is a schematic diagram illustrating a general configuration of the feedback control system 1 including the control device 10 according to the embodiment. The feedback control system 1 illustrated in Fig. 1 includes a PID control system. In the specification, the "PID control system" is a generic term of a control system including at least one of a proportional element performing proportional operation (P operation), an integration element performing integral operation (I operation), and a derivative element performing derivative operation (D operation). That is, in the specification, the PID control system is a concept including a control system including all of the proportional element, the integration element, and the derivative element and a control system (PI control system) including a part of the control elements, for example, only the proportional element and the integral operation.

As an example, Fig. 1 shows the feedback control system 1 related to the temperature adjustment of a heating furnace 2. In the feedback control system 1, the control device 10 outputs a manipulated value (hereinbelow, also referred to as "MV") so that temperature measured from the heating furnace 2 (hereinbelow, also referred to as process value or "PV") coincides with an input target value (setting value, hereinbelow, also referred to as "SV"). That is, the control device 10 determines the manipulated value which is output to a control target so that the process value obtained from the control target matches the target value.

In the field of control engineering, "process value" is defined as a value of "control value" including an error. If the error is ignored, the "process value" can be regarded as the "control value" for the control target. Consequently, in the following description, the "process value" may be read as "control value".

In the feedback control system 1, the control device 10 corresponds to an adjusting unit, and the heating furnace 2, a heater 3 for supplying power from a power supply 5 via a solid state relay (SSR) 4, and a temperature sensor 6 provided in the heating furnace 2 correspond to control targets. The heater 3 is typically a resistor and converts the power to be supplied, into thermal energy. The temperature sensor 6 is a detecting unit for measuring temperature in the heating furnace 2 and is made by a thermocouple and a resistance temperature detector (platinum resistance temperature detector).

The control device 10 outputs a manipulated value calculated by executing process related to the PID control system as will be described later to the solid state relay 4. In the feedback control system 1, as a rule, the manipulated value lies in a range of 0 to 100%, and the solid state relay 4 on/off controls circuits existing from the power supply 5 to the heater 3 at a duty ratio according to the manipulated value. For example, when the manipulated value is 50%, the period of 50% of a predetermined control cycle is set to an on state (current-carrying state) and the remaining period of 50% is set to an off state (non-current-carrying state). In this case, in sufficiently long time, the heat generation amount per unit time from the heater 3 is 50% of that in the case where current is passed to the heater 3.

As described above, by adjusting the manipulated value, the control device 10 causes the temperature of the heating furnace 2 (actually, the measurement value by the temperature sensor 6) of the heating furnace to coincide with a target value. The heat generation amount of the heater 3 depends on the duty ratio and, in principle, can be adjusted only in the range of 0 to 100%. Consequently, in the case where the manipulated value calculated in the PID control system exceeds 100% or is below 0%, the control target cannot perform an operation according to the manipulated value. In the specification, such a state (MV ≥ 100% and/or MV ≤ 0%) is expressed as a state that the manipulated value is "saturated".

B. Control Device

Next, the configuration of the control device 10 according to the embodiment will be described.

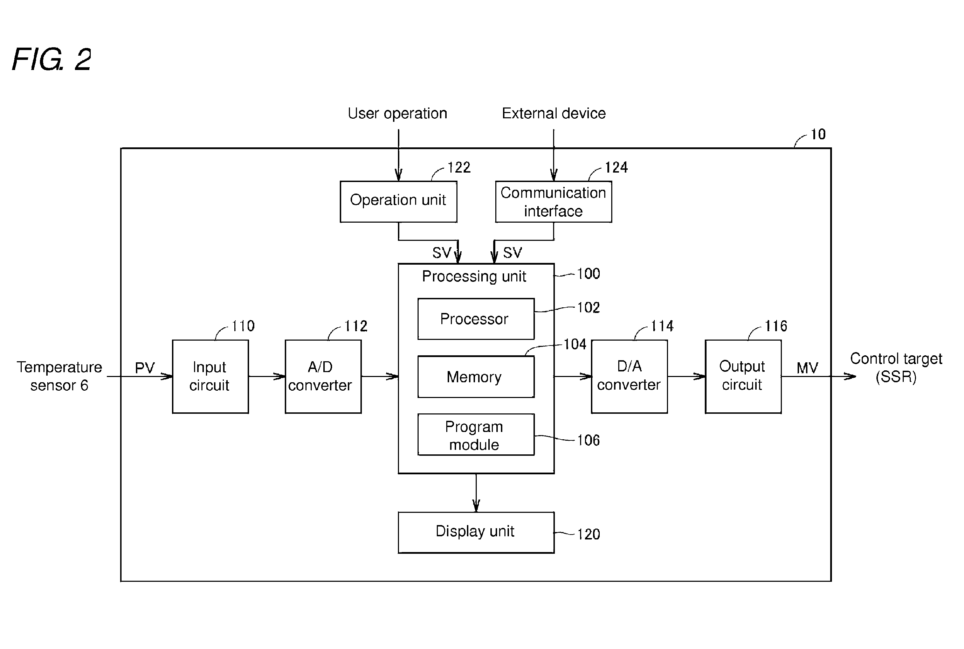

Fig. 2 is a schematic diagram illustrating a configuration of the control device 10 according to the embodiment. Referring to Fig. 2, the control device 10 includes an input circuit 110, an analog-to-digital converter 112 (hereinbelow, also described as "A/D converter 112"), a display unit 120, an operation unit 122, a communication interface 124, a processing unit 100, a digital-to-analog converter 114 (hereinbelow, also described as "D/A converter 114"), and an output circuit 116.

The input circuit 110 receives a measurement signal from the temperature sensor 6 and outputs a voltage/current signal in a predetermined range. In the case where the temperature sensor 6 is a thermocouple, the input circuit 110 includes a circuit for detecting thermoelectric force generated at its both ends. In the case where the temperature sensor 6 is a resistance temperature detector, the input circuit 110 includes a circuit for detecting the value of resistance which occurs in the resistance temperature detector. Further, the input circuit 110 may include a filter circuit for eliminating a high frequency component.

The A/D converter 112 converts an analog signal from the input circuit 110 to a digital signal and outputs the digital signal to the processing unit 100.

The operation unit 122 includes a button, a switch, and the like provided for the operation panel illustrated in Fig. 1, accepts an operation of the user, and outputs information indicative of the accepted user operation to the processing unit 100. Typically, the operation unit 122 receives a target value (SV) from the user.

The communication interface 124 transmits/receives various information to/from external devices (typically, a PLC (Programmable Logic Controller)). As a system configuration example, there is a case that a target value is supplied from a PLC disposed at higher order to the control device 10. In such a case, the information (for example, SV) from the PLC is supplied to the processing unit 100 via the communication interface 124.

The display unit 120 includes a display, an indicator, and the like provided for the operation panel illustrated in Fig. 1 and notifies the user of information indicative of the state of the process in the processing unit 100.

The processing unit 100 is a computer main body for realizing control related to the embodiment as will be described later and includes a processor 102, a memory 104, and a program module 106. The processor 102 executes the program module 106, thereby realizing process as described above. The program module 106 which is read and data (such as PV and SV) necessary for processes are primarily stored in the memory 104. As the processor 102, a general CPU (Central Processing Unit) or MPU (Micro-Processing Unit) may be used, or a DSP (Digital Signal Processor) for digital signal process may be used. The program module 106 is stored in a nonvolatile storage medium such as a flash memory. The program module 106 may be updated via various recording media. Consequently, the program module 106 itself may be included in the technical scope of the present invention. The processing unit 100 may be configured by using an FPGA (Field-Programmable Gate Array).

The D/A converter 114 converts a digital signal indicative of the manipulated value calculated by the processing unit 100 to an analog signal and outputs the analog signal to the output circuit 116.

The output circuit 116 changes the analog signal from the D/A converter 114 to a signal according to the control target (the solid state relay 4 in the example illustrated in Fig. 1). For example, in the case where 0 to 100% of the manipulated value corresponds to a voltage signal of 0 to 10V, the output circuit 116 adjusts the signal so that a signal in the voltage range is output. Alternatively, the output circuit 116 generates a PWM signal having the duty ratio according to the value of the manipulated value. Apart (the solid state relay 4 in the example illustrated in Fig. 1) performing operation according to the manipulated value (MV) is also described as an actuator.

C. Two-degree-of-freedom Control System

The control device 10 according to the embodiment has a two-degree-of-freedom control system as a feedback control system. As a typical example of the two-degree-of-freedom control system, in the following, a two-degree-of-freedom PID control system of a target value filter will be described. The outline and a possible problem of the two-degree-of-freedom PID control system of the target value filter will be described.

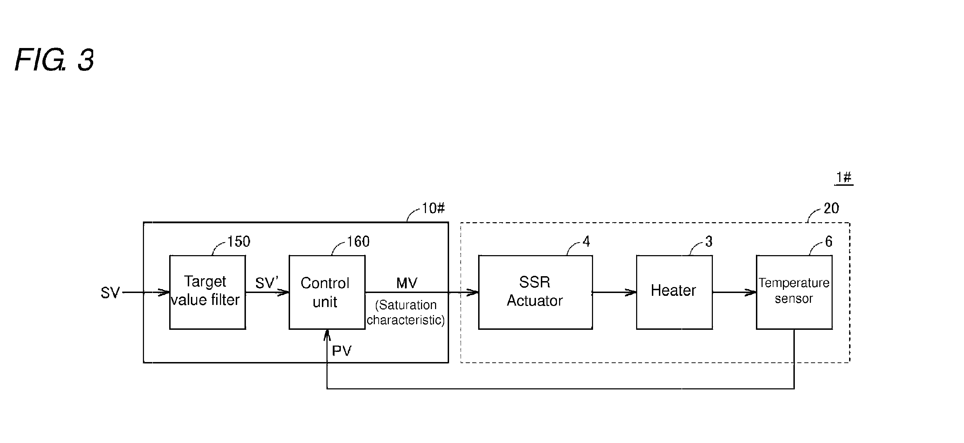

Fig. 3 is a schematic diagram illustrating a general configuration of a feedback control system 1# including a control device 10# according to a related art of the embodiment. It is assumed that, in the control device 10#, a general two-degree-of-freedom PID control system of a target value filter is mounted as a feedback control system. Referring to Fig. 3, the control device 10# includes, as functional configurations related to the PID control system, a target value filter 150 and a control unit 160 as a feedback compensation element. The target value filter 150 determines a target value characteristic in the feedback control system 1#, and the control unit 160 determines a feedback characteristic in the feedback control system 1#. The target value filter 150 is directed to improve a response characteristic to a change in the target value.

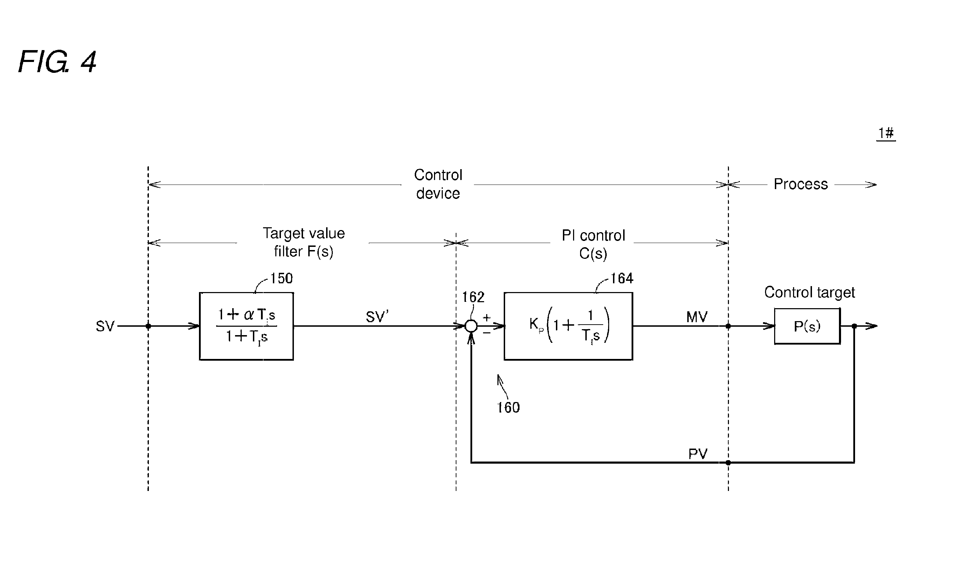

Fig. 4 is a control block diagram expressing, by elements, the feedback control system 1# including the control device 10# according to the related art of the embodiment. For convenience of explanation, Fig. 4 illustrates a simplified PID control system as the target value filter 150 and the control unit 160. As long as each of the purposes is achieved, a control system constructed by a combination which is more complicated, that is, a combination of a larger number of control elements may be employed.

Fig. 4 illustrates an example of employing, as the target value filter 150, a first-order lag filter. Specifically, it is assumed that the transfer function of the target value filter 150 is expressed as $F(s) = (1+\alpha T_I s)/(1+T_I s)$. $T_I$ denotes a time constant and is set to the same value as an integration time constant in the control unit 160 at a post stage. $\alpha$ denotes a predetermined coefficient. The target value filter 150 has a low-pass characteristic and performs time filtering on an input target value (SV), thereby calculating a target value (SV') that has been filtered. Consequently, when the target value (SV) is changed, the target value (SV') that has been filtered follows the changed target value with time delay according to the time constant peculiar to the target value filter 150.

An example of employing a PI control system as the control unit 160 will be described. Obviously, a derivative element is added, and a PID control system may be employed. More concretely, in the control unit 160, a difference element 162 calculates the difference between a target value (SV') that has been filtered of the target value filter 150 and a process value (PV), and the difference is supplied to a PI element 164 where a manipulated value (MV) is calculated. The PI element 164 is a kind of a first-order lag filter, and its transfer function $C(s) = K_P(1+1/T_I s)$. $K_P$ denotes here a proportional gain. That is, the control unit 160 determines a manipulated value in accordance with a deviation between a target value that has been filtered and a process value.

The integration element is used to solve a problem that a steady-state deviation (offset) remains only by the proportional operation to increase/decrease an integration value at change velocity according to the inverse of a corresponding integration time constant. As illustrated in Fig. 4, the control unit 160 (PI element 164) includes an integration element (the part of $1/s$, $1/s^2$, ... in the transfer function). The target value filter 150 has a low-pass characteristic realized by a first-order lag transfer function, and filters a target value by the low-pass characteristic.

In the two-degree-of-freedom PID control system of the target value filter type illustrated in Figs. 3 and 4, the transfer function C(s) of the control unit 160 is determined according to the transfer function P(s) of the control target. That is, according to a response characteristic of the control target, the proportional gain $K_P$ and the integration time constant $T_I$ of the PI element 164 are tuned. After that, a target value characteristic (transfer function F(s)) by the target value filter 150 is determined.

After the target value (SV) is changed, the target value filter 150 tuned as described above calculates the target value (SV') that has been filtered in accordance with the transfer function P(s). By such filtering, the target value which is supplied to the difference element 162 is prevented from sharp change and gradually changes according to the time constant of the target value filter 150. Consequently, the difference supplied to the PI element 164 also gradually increases/decreases at change rate according to the response characteristic of the control target without sharply changing. Therefore, the value according to the difference accumulated in the integration element of the PI element 164 is prevented from becoming excessive. In conceptual expression, when the target value is changed, the target value filter 150 causes the target value to gradually change from a present value to a value after change at a change rate adapted to the response characteristic of the entire system including the PI element 164 and the control target. In such a manner, saturation of the manipulated value of the control unit 160 is prevented.

D. Problem and Solving Means in Two-Degree-Of-Freedom Control System

By employing the target value filter 150 as described above, even in the case where a target value is changed, the control target can be stably controlled. However, in the case where the change amount of the target value becomes excessive, before the control target follows the target value after the change, the target value that has been filtered, and that is output from the target value filter 150 reaches the changed target value. Consequently, the deviation which is input to the PI element 164 in the control unit 160 becomes excessive and the value (integration value) accumulated in the integration element of the PI element 164 also becomes excessive. As a result, a manipulated value output from the control unit 160 becomes saturated. When the manipulated value is saturated, the change rate of the process value is limited. Time required for the process value to reach the target value tends to be longer than that in the case where the manipulated value is not saturated.

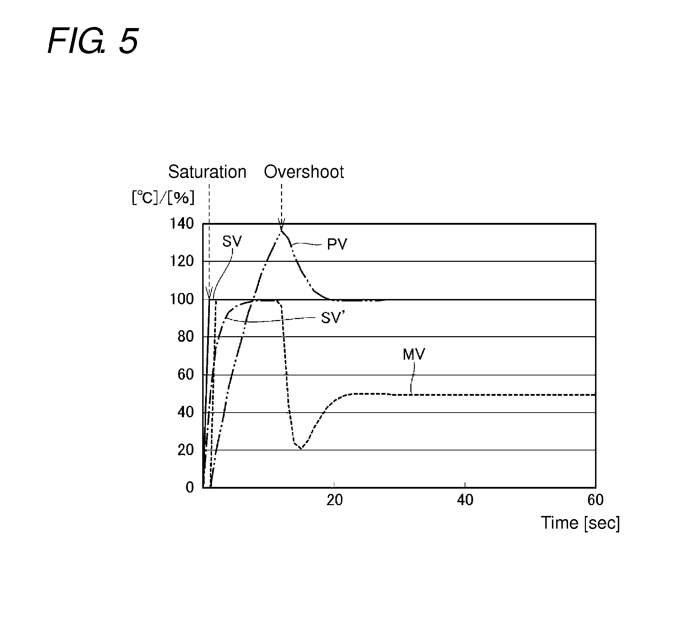

Fig. 5 is a diagram illustrating an example of a simulation result in a general two-degree-of-freedom PID control system of a target value filter type. In the simulation example illustrated in Fig. 5, it is understood that, in a stationary state where both of the target value (SV) and the process value (PV) are 0%, a behavior in time in the case where the target value (SV) is changed to 100% at reference time (time = 0) is illustrated. As illustrated in Fig. 5, when the target value (SV) is changed from 0% to 100%, a target value (SV') that has been filtered reaches 100% in relatively short time. As a result, it is understood that the manipulated value (MV) output from the control unit 160 is also saturated in relatively short time. In other words, when such a manipulated value is saturated, before the process value reaches the target value, an output value of the target value filter 150 (an output value that has been filtered) rises, so that no filter effect is resulted. When there is no filter effect, the value (integration value) accumulated in the integration element in the PI element 164 becomes excessive. As a result, even when the process value reaches the target value, the state where the manipulated value is saturated is maintained, and overshoot or fluctuation occurs in the control target.

The inventors of the present invention found a new problem in the two-degree-of-freedom PID control system of the target value filter type and also found that reduction/disappearance of the filter effect in the target value filter 1500 is the cause of the problem. In light of the findings, the inventors of the present invention paid attention to the fact that, in a general two-degree-of-freedom PID control system of a target value filter type 150, the time constant of the target value filter type, that is, the low-pass characteristic of the target value filter 150 is constant regardless of whether the manipulated value is saturated or not.

The inventors of the present invention reached a novel technical idea that by delaying the change rate of the target value that has been filtered, and that is output from the target value filter 150 in a state where the manipulated value is going to be saturated or in a state where the manipulated value is saturated, the saturation of the manipulated value is prevented or reduced, so that the response characteristic of the feedback control system can be improved.

As realizing means for delaying the change rate in the target value that has been filtered, and that is output from the target value filter 150, typically, there are a method of changing the time constant Tf related to the low-pass characteristic of the target value filter 150 so as to become longer and a method of stopping output updating operation in the target value filter 150. The latter method is equivalent to a method of increasing the time constant Tf related to the low-pass characteristic to infinity. As long as the change rate in the target value that has been filtered, and that is output from the target value filter 150 can be delayed, any of the methods may be employed.

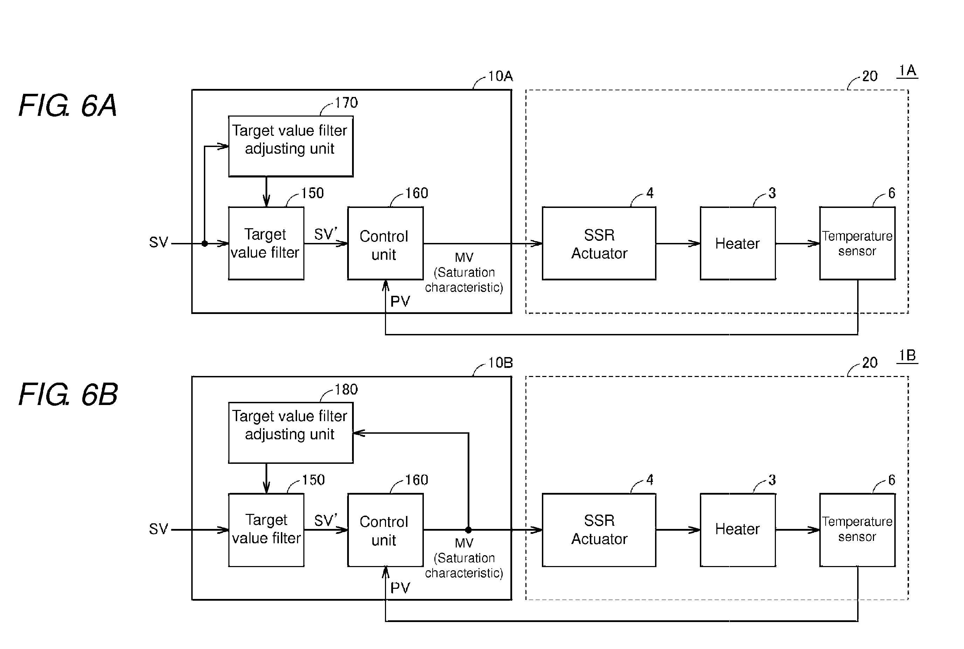

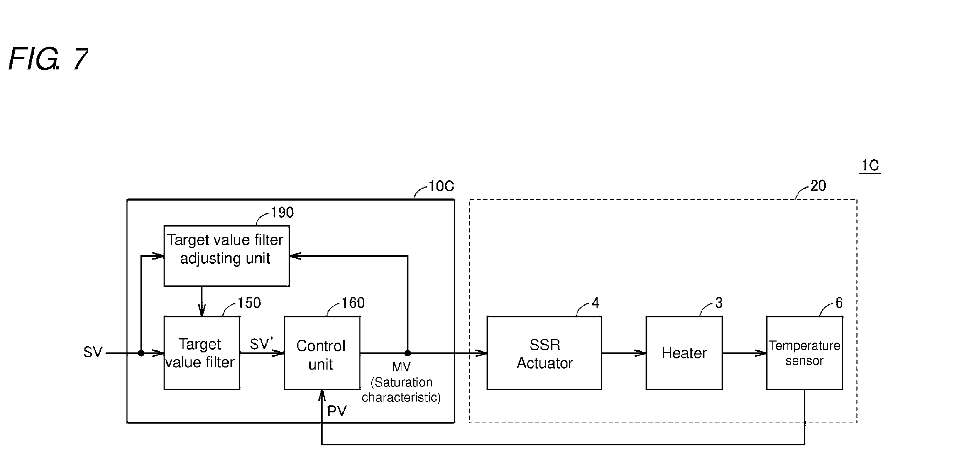

Figs. 6A and 6B and Fig. 7 are schematic diagrams each illustrating a general configuration of a feedback control system including the control device 10 according to the embodiment of the invention. For convenience of explanation, reference characters "A", "B", and "C" for identifying embodiments are added to the reference numeral 10 of the control device. The control devices 10 have basically the same configuration described above.

Fig. 6A illustrates a configuration for changing the low-pass characteristic of the target value filter 150 in accordance with the change amount of the target value (a method of correcting the time constant off-line), and Fig. 6B illustrates a configuration for changing the low-pass characteristic of the target value filter 150 in accordance with the target value that has been filtered, and that is output from the target value filter 150. That is, Fig. 6A illustrates the configuration of the case employing a method of preliminarily causing the low-pass characteristic of the target value filter 150 to be proper when there is the possibility of saturation of the manipulated value, and Fig. 6B illustrates the configuration of the case employing a method of causing the low-pass characteristic of the target value filter 150 to be proper in the case where the manipulated value is saturated or is going to be saturated.

More concretely, in a feedback control system 1A illustrated in Fig. 6A, a control device 10A includes the target value filter 150 and the control unit 160 and, in addition, a target value filter adjusting unit 170. The target value filter adjusting unit 170 changes the time constant Tf of the target value filter 150 so as to be longer in accordance with a change in the target value. That is, by changing the time constant Tf related to the low-pass characteristic of the target value filter 150, the target value filter adjusting unit 170 delays the change rate in the target value that has been filtered, and that is output from the target value filter 150. At this time, when a target value is changed, the target value filter adjusting unit 170 changes the time constant Tf so as to be longer in accordance with the size of the change amount (absolute value) of the target value.

In a feedback control system 1B illustrated in Fig. 6B, a control device 10B includes the target value filter 150 and the control unit 160, in addition to a target value filter adjusting unit 180. The target value filter adjusting unit 180 changes the time constant Tf of the target value filter 150 so as to be longer when a determined manipulated value becomes out of a predetermined permissible range or becomes close to a predetermined permissible range. That is, by delaying the change rate in the target value that has been filtered, and that is output from the target value filter 150 while the determined manipulated value is out of the permissible range, the target value filter adjusting unit 180 suppresses the change rate in the target value that has been filtered. As means for delaying the change rate of a target value that has been filtered, and that is output from the target value filter 150, there are a method of changing the time constant Tf related to the target value filter 150 to be longer and a method of stopping output updating operation itself of the target value filter 150.

Further, like a control device 10C illustrated in Fig. 7, a target value filter adjusting unit 190 having both of the functions of the target value filter adjusting unit 170 illustrated in Fig. 6A and the target value filter adjusting unit 180 illustrated in Fig. 6B may be employed.

Hereinafter, the details of the operation and process in each of the control devices will be described.

E. First Embodiment

Next, as a first embodiment, the control device 10A illustrated in Fig. 6A will be described. As described above, the control device 10A according to the first embodiment changes the output updating operation (time constant Tf) by the target value filter 150 in accordance with the change amount of the target value. At this time, the length of the time constant Tf is determined according to the size of the change amount of the target value. That is, as the change amount of the target value is larger, the control device 10A changes the time constant Tf of the target value filter 150 to be longer.

e1: Outline of Time Constant Changing Process of Target value filter

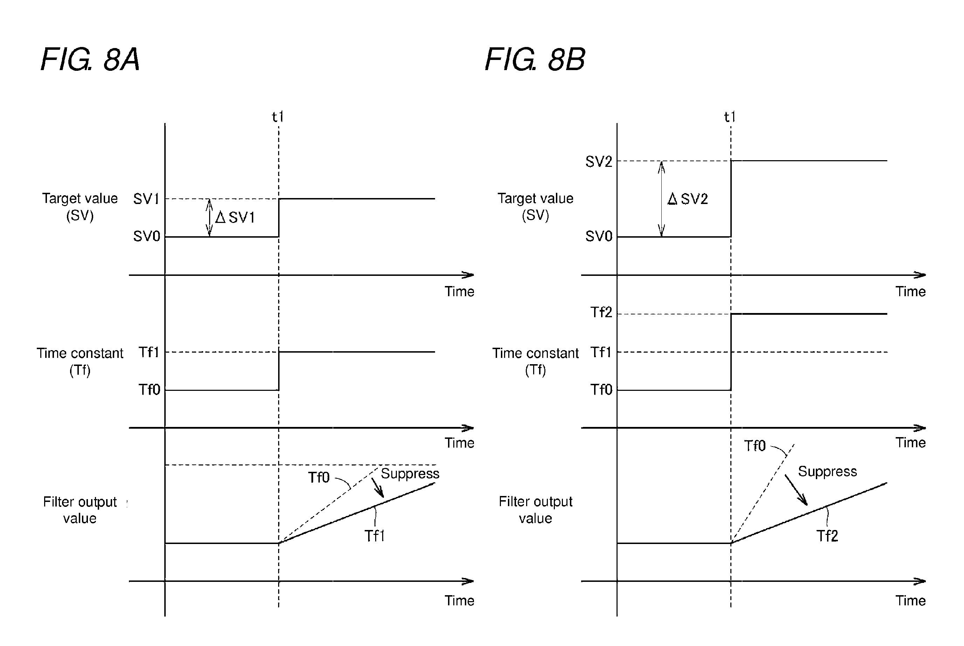

Figs. 8A and 8B are conceptual diagrams for explaining process of changing the time constant Tf of the target value filter 150 in the control device 10A according to the first embodiment. Fig. 8A illustrates an example of the case where the target value SV is changed from SV0 to SV1 (change amount $\Delta$SV1), and Fig. 8B illustrates an example of the case where the target value SV is changed from SV0 to SV2 (> SV1) (change amount $\Delta$SV2 > $\Delta$SV1).

Referring to FIG 8A, when the target value SV is changed from SV0 to SV1 at time t1, the control device 10A (target value filter adjusting unit 170) changes the time constant Tf of the target value filter 150 from Tf0 to Tf1 (> Tf0). Although the output of the target value filter 150 increases (or decreases) in association with the change in the target value, when the change amount $\Delta$SV1 is large, the change rate of the output is also high, and duration of the filter effect of the target value filter 150 becomes shorter. Consequently, by changing the time constant Tf to be longer, the change rate of the output of the target value filter 150 is suppressed, and the duration of the filter effect is made longer.

Referring to FIG 8B, when the target value SV is changed from SV0 to SV2 at time t1, the control device 10A changes the time constant Tf of the target value filter 150 from Tf0 to Tf2, (> Tf1). That is, as the change amount (absolute value) of the target value is larger, the control device 10A changes the time constant Tf to be longer. Consequently, without being influenced by the change amount $\Delta$SV of the target value SV, the change rate of the output can be maintained almost constant.

e2: Method of Determining Time Constant of Target value filter (No. 1)

Next, an example of a method of determining the time constant of the target value filter 150 according to the change amount of the target value will be described.

Whether the change amount of the target value is excessive or not in a target feedback control system is determined according to the feedback characteristic (transfer function) in the control unit 160 as the feedback compensation element. Therefore, according to the magnitude relation between proportional bands Pb and $\Delta$SV of the PI element 164 (transfer function $C(s) = Kp(1+1/T_I s)$) of the control unit 160, the time constant Tf of the target value filter 150 is determined. When Kp is a standardized proportional gain, the proportional band Pb is an inverse of the proportional gain, that is, the proportional band Pb = 1/Kp. More concretely, in the case where the change amount $\Delta$SV of the target value is larger than the proportional band Pb, a standard time constant Tf0 of the target value filter 150 is corrected by the equation (2) using a target value filter time constant correction coefficient $\beta$ calculated by the following equation (1), thereby calculating the time constant Tf of the target value filter.

$$\text{Target value filter time constant correction coefficient } \beta = \text{change amount } \Delta SV/\text{proportional band Pb} \dots (1)$$

(where target value filter time constant correction coefficient $\beta \geq 1.0$)

$$\text{Time constant Tf} = \text{standard time constant Tf0} \times \text{target value filter time constant correction coefficient } \beta \dots (2)$$

The standard time constant Tf0 of the target value filter 150 is determined according to the transfer function of the PI element 164 of the control unit 160. Typically, the standard time constant Tf0 is set to the same value as the integration time constant $T_I$ of the PI element 164.

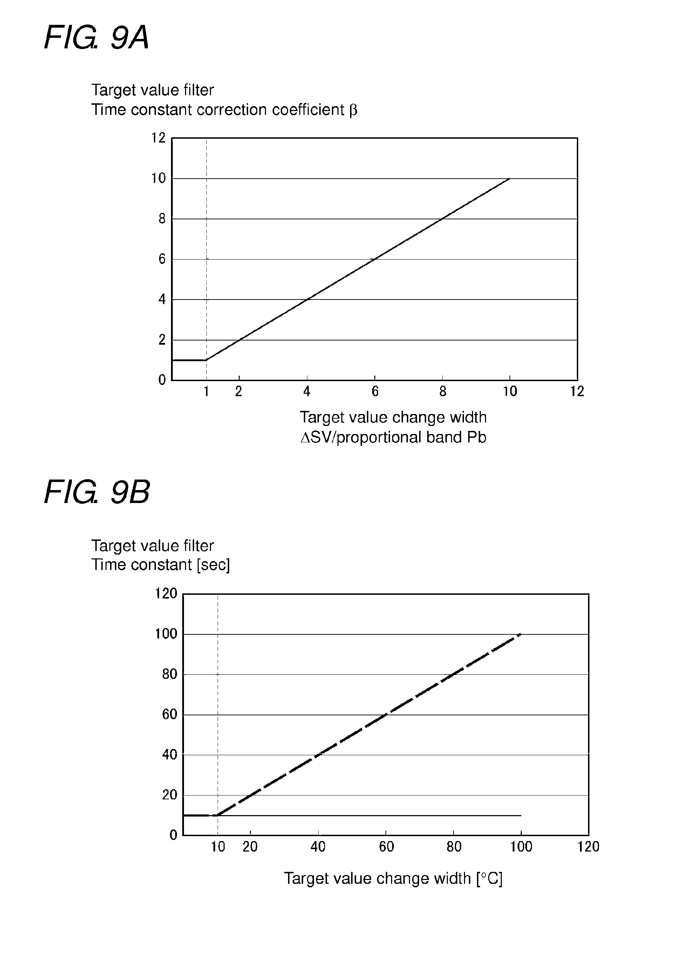

Figs. 9A and 9B are diagrams illustrating an example of setting related to the process of changing the time constant Tf of the target value filter 150 in the control device 10A according to the first embodiment. Fig. 9A is a diagram of plotting the target value filter time constant correction coefficient $\beta$ calculated according to the equation (1). As illustrated in Fig. 9A, in the case where the change amount $\Delta SV$ of the target value SV is larger than the proportional band Pb, the target value filter time constant correction coefficient $\beta$ increases in proportional to the change amount $\Delta SV$

In the case where the change amount $\Delta SV$ is equal to or less than the proportional band Pb, it is predicted that the control target can be controlled without saturation of the manipulated value. Consequently, as the time constant of the target value filter 150, the standard time constant is employed. That is, the target value filter time constant correction coefficient $\beta$ is maintained at 1. In other words, even in the case where the target value is changed, when the change amount $\Delta SV$ of the target value is smaller than a predetermined value (the proportional band Pb), the target value filter adjusting unit 180 of the control device 10A maintains the time constant Tf of the target value filter 150 for the following reason. It is predicted that the original control operation by the two-degree-of-freedom PID control system of the target value filter can be realized.

e3: Simulation Example (Improvement Effect)

Subsequently, an improvement effect in the two-degree-of-freedom PID control system of the target value filter type according to the first embodiment will be described.

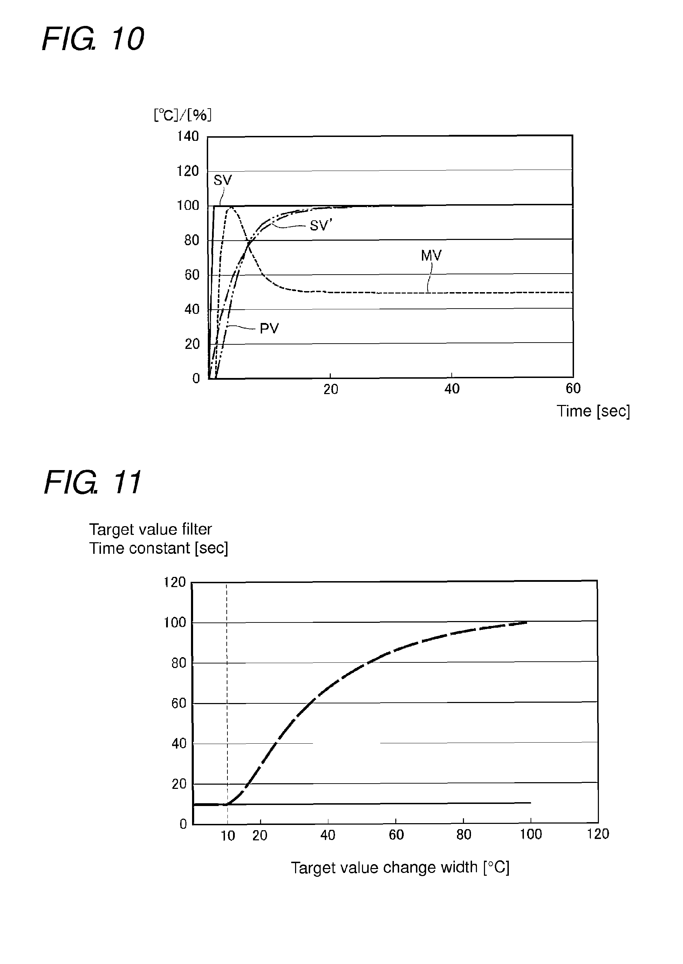

Fig. 10 is a diagram illustrating an example of a simulation result in the two-degree-of-freedom PID control system of the target value filter type according to the first embodiment. Parameters and conditions used for a simulation illustrated in Fig. 10 are the same as those for the simulation illustrated in Fig. 5 except for a change in the time constant of the target value filter 150.

In the simulation example illustrated in Fig. 10, the target value (SV') that has been filtered, and that is output from the target value filter 150 rises gently. There is no saturation in the manipulated value (MV), and no overshoot or fluctuation occurs in the control target. In another aspect, the change rate of the target value (SV') that has been filtered is suppressed in accordance with the response speed of the control target.

By employing the process of changing the time constant of the target value filter 150 according to the first embodiment as described above, even when the target value is largely changed, stability and response of the feedback control system can be maintained.

e4: Method of Determining Time Constant of Target value filter (No. 2)

The method of determining the time constant Tf of the target value filter 150 is not limited to the above-described method but various methods may be employed. Although the example of determining the target value filter time constant correction coefficient $\beta$ as a linear function of the ratio of $\Delta SV$ for the proportional band Pb of the PI element 164 is illustrated in Figs. 9A and 9B, a high-order function may be used.

Fig. 11 is a diagram illustrating another example of setting related to the process of changing the time constant Tf of the target value filter 150 in the control device 10A according to the first embodiment. As illustrated in Fig. 11, for the change amount $\Delta SV$ of a target value, the time constant Tf of the target value filter 150 may be changed nonlinearly. In the case of changing the time constant Tf nonlinearly, the characteristic as illustrated in Fig. 11 may be preliminarily stored in a table and the time constant Tf may be determined with reference to the table.

Preferably, as the change amount $\Delta SV$ of the target value is larger, the control device 10A changes the time constant Tf of the target value filter 150 to be longer.

e5: Procedures

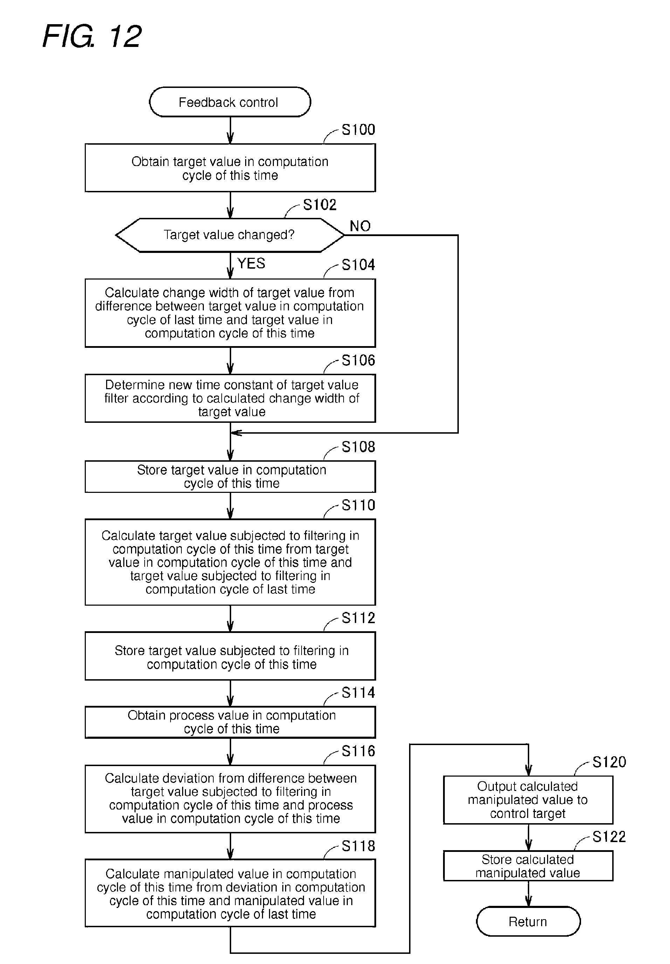

Next, procedures executed in the control device 10A of the first embodiment will be described. Fig. 12 is a flowchart illustrating procedures executed in the control device 10A according to the first embodiment. Fig. 12 illustrates a feedback control method of determining a manipulated value which is output to a control target so that a process value obtained from the control target matches a target value. Steps illustrated in Fig. 12 are realized typically when the processor 102 in the processing unit 100 executes an instruction code included in the program module 106. The procedures illustrated in Fig. 12 are repeatedly executed in predetermined computation cycles (for example, every 100 msec).

Referring to Fig. 12, the processor 102 obtains a target value in a computation cycle of this time (step S100) and determines whether a target value is changed or not based on the difference between the target value and a target value in a computation cycle of the last time (step S102). In the case where the target value is not changed (NO in step S102), processes in steps S104 and S106 which will be described later are skipped.

In the case where the target value is changed (YES in step S102), the processor 102 calculates the change amount of the target value from the difference between the target value in the computation cycle of last time and the target value in the computation cycle of this time (step S104). The processor 102 determines a new time constant of the target value filter in accordance with the calculated change amount of the target value (step S106). That is, in steps S102 and S104, the processor 102 delays the change rate of the target value that has been filtered, and that is output from the target value filter in accordance with the change in the target value. As a process of delaying the change rate in the target value that has been filtered, the processor 102 changes the time constant related to the low-pass characteristic of the target value filter. At the time of determining the time constant related to the low-pass characteristic, when the target value is changed, the processor 102 makes the time constant longer in accordance with the change amount of the target value.

As described with reference to Figs. 9 and 11, even in the case where the target value is changed, when the change amount of the target value is smaller than a predetermined value, it is preferable to maintain the time constant of the target value filter.

Subsequently, the processor 102 stores the target value in the computation cycle of this time (step S108) and calculates the target value that has been filtered, in the computation cycle of this time from the target value in the computation cycle of this time and the target value that has been filtered, in the computation cycle of last time (step S110). That is, the processor 102 filters the target value by using the filter having the low-pass characteristic. The processor 102 stores the target value that has been filtered, in the computation cycle of this time calculated (step S112).

The processor 102 obtains a process value in the computation cycle of this time (step S114) and calculates a deviation from the difference between the target value that has been filtered, in the computation cycle of this time and the process value in the computation cycle of this time (step S116). The processor 102 calculates a manipulated value in the computation cycle of this time from the deviation in the computation cycle of this time and the manipulated value in the computation cycle of last time (step S118).

The processor 102 outputs the calculated manipulated value to the control target (solid state relay 4) (step S120) and stores the manipulated value (step S122). Since a value (integral value) accumulated in the integration element is used in step S118, the integration value accumulated in the PI element 164 is also stored in step S122. The processes in step S100 and the following steps are repeated.

e6: Conclusion

As described above, in a feedback control system (typically, a PI control system or a PID control system) in which the manipulated value (the output of the control device 10 corresponding to the adjusting unit) has a saturation characteristic, when the change amount of the target value becomes excessive, the manipulated value is saturated, and stability and responsiveness decreases. Consequently, the control device 10A of the embodiment changes the time constant of the target value filter in the direction of following the delay in the responsiveness of the control target.

Preferably, as the change amount (absolute value) of the target value is larger, the control device 10 changes the time constant of the target value filter to be longer. The control device 10 of the embodiment automatically optimally sets the time constant of the target value filter in accordance with the change amount of the target value. As a method of setting the time constant of the target value filter, in the control unit (PI element or PID element), using the proportional band as a reference, the time constant of the target value filter is determined so as to increase in proportional to the ratio of the change amount (absolute value) of the target value. In the case where the change amount (absolute value) of the setting temperature is equal to or less than the change amount (absolute value), the original control characteristic of the two-degree-of-freedom PID control system of the is obtained. Consequently, the time constant of the target value filter is limited to a predetermined lower limit value (standard time constant).

F. Second Embodiment

As a second embodiment, the control device 10B illustrated in Fig. 6B will be described. As described above, the control device 10B according to the second embodiment delays the change rate in the target value that has been filtered, and that is output from the target value filter 150 when the determined manipulated value goes out from a predetermined permissible range or becomes close to the permissible range.

f1: Outline of Process of Delaying Change Rate in Target value that has been filtered, and that is output from Target value filter

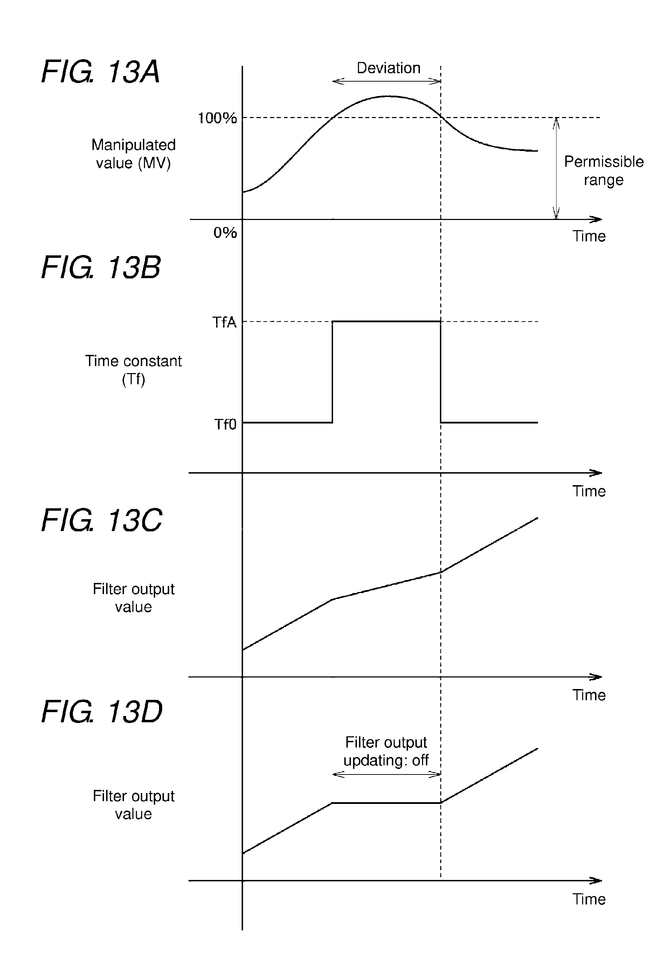

Figs. 13A to 13D are conceptual diagrams for explaining a filtering changing process in the target value filter 150 in the control device 10B according to the second embodiment. As illustrated in Fig. 13A, whether the manipulated value (MV) deviates from a predetermined permissible range (typically, 0% to 100%) or not is determined. In the case where the manipulated value deviates from the permissible range, the control device 10B (the target value filter adjusting unit 180) delays the change rate of the target value that has been subjected to filtering which is output from the target value filter 150.

Typically, as illustrated in Fig. 13B, when the manipulated value deviates from the permissible range, the target value filter adjusting unit 180 changes the time constant $Tf$ of the target value filter 150 so as to be longer. In the example illustrated in Fig. 13B, the time constant $Tf$ of the target value filter 150 is changed from $Tf0$ to $TfA$ ($> Tf0$). By the change, as illustrated in Fig. 13C, the change rate in the output of the target value filter 150 is suppressed. That is, while the determined manipulated value deviates from the permissible range, the control device 10B (the target value filter adjusting unit 180) suppresses the change rate in the target value that has been filtered, and that is output from the target value filter 150.

Alternately, as illustrated in Fig. 13D, the output updating operation in the target value filter 150 may be stopped. That is, while the determined manipulated value deviates from the permissible range, the control device 10B (the target value filter adjusting unit 180) stops output calculation (updating) of the target value filter 150 and maintains the target value that has been filtered at the value before the deviation. In such a manner, the control device 10B (the target value filter adjusting unit 180) delays the change rate in the output of the target value filter 150, that is, the change rate in the target value that has been filtered.

As described above, in the second embodiment, in a period in which the manipulated value is saturated, the change rate in the target value that has been filtered, and that is output from the target value filter 150 is delayed. By delaying the change rate in the target value that has been filtered, and that is output from the target value filter 150 only in the period in which the manipulated value deviates from the permissible range (is saturated) as illustrated in Figs. 13B and 13C or Fig. 13D, in the case where the manipulated value lies on the border of the permissible range, there is the possibility that hunting occurs. That is, there is the possibility that a state where the change rate in the target value that has been filtered, and that is output from the target value filter 150 is delayed and the other state are repeated in a short period. Consequently, the manipulated value and the permissible range are compared and when the manipulated value becomes larger than an upper-side threshold value $Th1$ of the permissible range, it is determined that the manipulated value deviates (saturated) from the permissible range. When the manipulated value becomes lower than a lower-side threshold value $Th2$ of the permissible range, it is determined that the manipulated value deviates (saturated) from the permissible range. In the determination of whether the manipulated value deviates from the permissible range or not, by providing a dead band as described above, occurrence of hunting is suppressed, and the control system can be stabilized.

f2: Simulation Example (Improvement Effect)

Subsequently, an improvement effect in the two-degree-of-freedom PID control system of the target value filter type according to the second embodiment will be described.

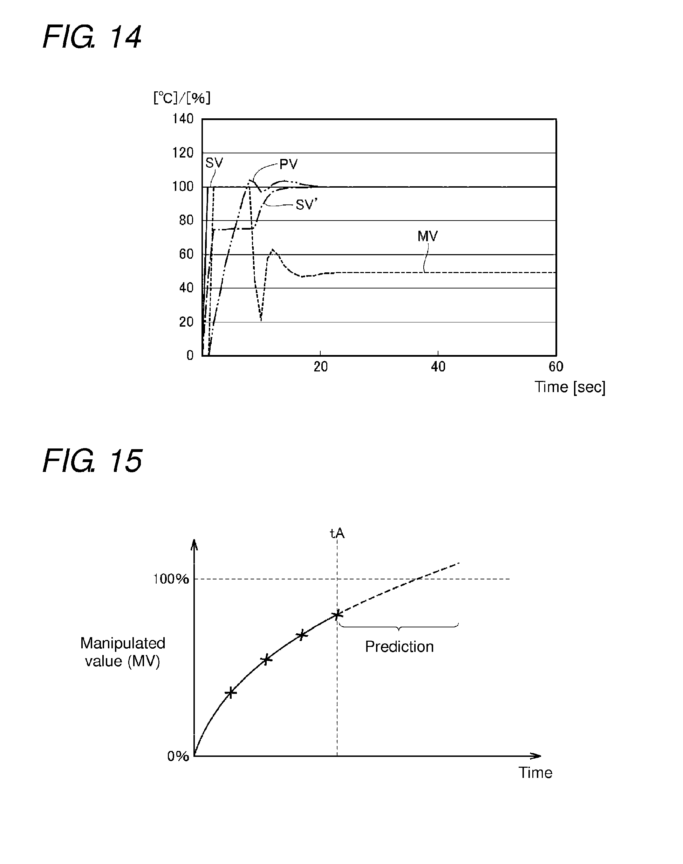

Fig. 14 is a diagram illustrating an example of a simulation result in the two-degree-of-freedom PID control system of the target value filter type according to the second embodiment. Parameters and conditions used for the simulation illustrated in Fig. 14 are the same as those for the simulation illustrated in Fig. 5 except for a change in the time constant of the target value filter 150.

In the simulation example illustrated in Fig. 14, the target value (SV) to be input largely changes and, accompanying the large change, the manipulated value (MV) reaches saturation in relatively short time. In a period in which the manipulated value (MV) is saturated, the change rate in the target value (SV') that has been filtered, and that is output from the target value filter 150 is delayed. That is, in a period in which the manipulated value (MV) is saturated, the change rate in the target value (SV') that has been filtered is suppressed. After that, when saturation of the manipulated value (MV) is solved, the filtering operation of the target value filter 150 returns to the original state, and the target value (SV') that has been filtered rises again. By controlling the low-pass characteristic in the target value filter 150 as described above, even when the manipulated value (MV) is saturated, occurrence of overshoot or fluctuation in the control target can be avoided.

By employing the process of changing the low-pass characteristic in the target value filter 150 according to the second embodiment as described above, even when the target value is largely changed, stability and responsiveness of the feedback control system can be maintained.

f3: Deviation Prediction

In the above, an example of starting the process of delaying the change rate in a target value that has been filtered, and that is output from the target value filter 150 after the manipulated value deviates from a permissible range has been described. It is also possible to predict deviation of the manipulated value from the permissible range and delay the change rate in the target value that has been filtered. Specifically, when a manipulated value determined by the control unit 160 becomes close to a predetermined permissible range, the change rate in a target value that has been filtered may be delayed.

As a method of predicting deviation of the manipulated value from the permissible range, various methods can be employed. For example, determination may be done based on the computation value in the PI element 164 of the control unit 160, or a control logic such as an observer may be used. Alternately, as will be described in the following, whether the manipulated value deviates from the permissible range or not may be predicted based on the trend of change with time of the manipulated value.

Fig. 15 is a conceptual diagram for explaining process of predicting a manipulated value in the control device 10B according to the second embodiment. As illustrated in Fig. 15, at time tA, according to the change with time in the manipulated value which occurred before, the target value filter adjusting unit 180 estimates change with time of the manipulated value which may occur afterwards.

For example, the change rate in the manipulated value is calculated from the change with time of the manipulated value before time tA and, based on an allowance to the permissible range at the time tA, whether the manipulated value will deviate from the permissible range or not can be determined. That is, in the step of delaying the change rate in a target value that has been filtered, approach to the permissible range is detected based on the change rate in the determined manipulated value and the allowance for limit of the permissible range.

Alternately, a function indicative of a change characteristic is determined by fitting process or the like from the change with time in the manipulated value before the time tA. Based on the determined function, the behavior of a manipulated value in future is estimated. In the case where it is predicted that the manipulated value will deviate from the permissible range within predetermined time as a result of the estimation, the change rate in the target value that has been filtered may be delayed at the time point.

f4: Procedures

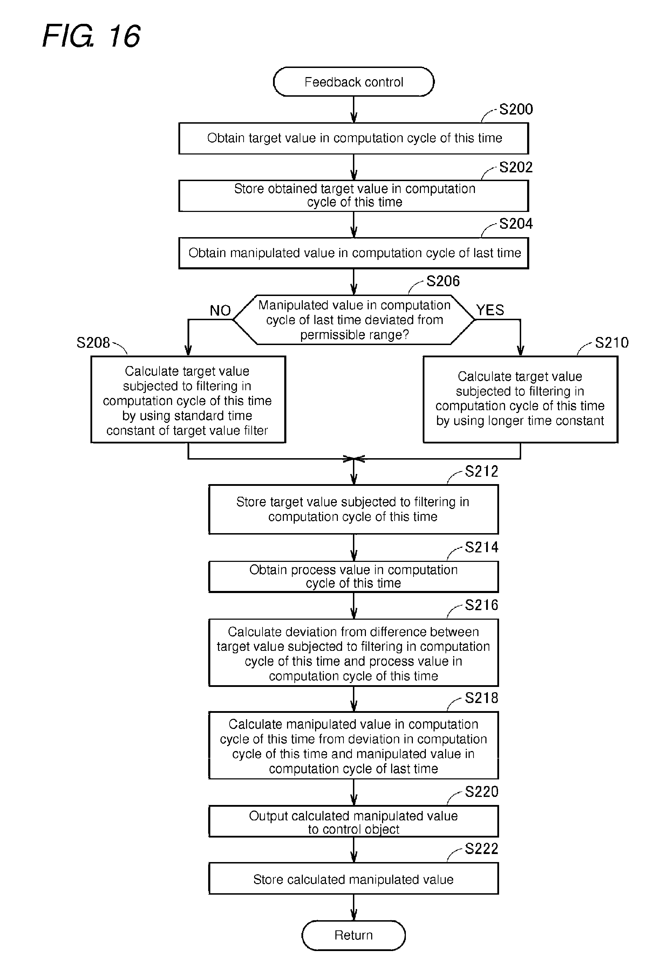

Procedures executed in the control device 10B according to the second embodiment will now be described. Fig. 16 is a flowchart illustrating procedures executed in the control device 10B according to the second embodiment. Fig. 16 depicts a method of feedback control of determining a manipulated value which is output to a control target so that a process value obtained from the control target matches a target value. Each of steps shown in Fig. 16 is realized typically when the processor 102 of the processing unit 100 executes an instruction code included in the program module 106. The procedures illustrated in Fig. 16 are repeatedly executed in predetermined computation cycles (for example, every 100 msec).

Referring to Fig. 16, the processor 102 obtains a target value in a computation cycle of this time (step S200) and stores the obtained target value in the computation cycle of this time (step S202). Subsequently, the processor 102 obtains a manipulated value in the computation cycle of last time (step S204) and determines whether the obtained manipulated value in the computation cycle of last time deviates from the permissible range or not (step S206).

In the case where the obtained manipulated value in the computation cycle of last time does not deviate from the permissible range (NO in step S206), normal filtering process is executed in the target value filter. That is, using the standard time constant of the target value filter, the processor 102 calculates a target value that has been filtered, in the computation cycle of this time from a target value in the computation cycle of this time and a target value that has been filtered, in the computation cycle of last time (step S208). That is, the processor 102 filters the target value with the target value filter having the low-pass characteristic.

On the other hand, in the case where the obtained manipulated value in the computation cycle of last time deviates from the permissible range (YES in step S206), the change rate in the target value that has been filtered, and that is output from the target value filter is delayed. That is, using a longer time constant, the processor 102 calculates a target value that has been filtered, in the computation cycle of this time from a target value in the computation cycle of this time and a target value that has been filtered, in the computation cycle of last time (step S210). That is, in step S210, in accordance with the fact that the manipulated value deviates from the predetermined permissible range, the processor 102 delays the change rate in the target value that has been filtered, and that is output from the target value filter. As a process of delaying the change rate in the target value that has been filtered, the processor 102 changes the time constant related to the low-pass characteristic of the target value filter.

In addition to or in place of step S206, whether the manipulated value in the computation cycle of last time becomes close to the permissible range or not may be determined. That is, based on the change rate in the determined manipulated value and the allowance for limit of the permissible range, approach to the permissible range may be detected.

The processor 102 stores the target value that has been subjected to filtering, in the computation cycle of this time which is calculated in step S208 or S210 (step S212). Subsequently, the processor 102 obtains a process value in the computation cycle of this time (step S214) and also calculates a deviation from the difference between the target value that has been subjected to filtering, in the computation cycle of this time and a process value in the computation cycle of this time (step S216). The processor 102 calculates a manipulated value in the computation cycle of this time from the deviation in the computation cycle of this time and the manipulated value in the computation cycle of last time (step S218).

Subsequently, the processor 102 outputs the calculated manipulated value to a control target (the solid state relay 4) (step S220) and stores the manipulated value (step S222). Since a value (integration value) accumulated in the integration element is used in step S218, the integration value accumulated in the PI element 164 is also stored in step S222. The processes in step S200 and subsequent steps are repeated.

f5: Conclusion

As described above, in a feedback control system (typically, a PI control system or a PID control system) in which the manipulated value (the output of the control device 10 corresponding to the adjusting unit) has a saturation characteristic, when the manipulated value is saturated, stability and responsiveness decreases. Consequently, the control device 10B of the embodiment changes the time constant of the target value filter so as to be temporarily increased in a period in which the manipulated value is saturated or is going to be saturated, thereby suppressing the change rate in the manipulated value. In a period in which the manipulated value is not saturated, the time constant of the target value filter is reset. By suppressing the change rate in the target value that has been subjected to filtering which is output from the target value filter while the manipulated value is saturated, traceability to the target value is enhanced.

G Third Embodiment

As described above, generally, the time constant of the target value filter 150 is set to the same value as the integration time constant of the PID control system disposed in a post state. In the above-described first and second embodiments, the configurations of dynamically changing the time constant of the target value filter 150 are illustrated. In a third embodiment, a configuration that the time constant of the target value filter 150 of the two-degree-of-freedom control system can be set independently of an integration time constant of the PID control system will be described.

The configuration and main operation of a control device 10D are similar to the above-described ones, so that their detailed description will not be repeated.

The control device 10D according to the third embodiment determines the time constant Tf of a filter as the time constant of the target value filter 150 independently of the integration time constant $T_I$ of the PID control system. More concretely, using a preset coefficient k, the time constant Tf of the target value filter 150 is automatically calculated by "integration time constant $T_I \times$ coefficient k". Specifically, the processing unit 100 of the control device 10D calculates the time constant Tf as the time constant of the target value filter 150 by "time constant Tf = integration time constant $T_I \times$ coefficient k" in relation to the integration time constant $T_I$ of the PID control system including the integration element for determining a manipulated value, and the coefficient k.

The coefficient k can be arbitrarily set/changed by the user. The operation of setting/changing the coefficient k is performed via the operation unit 122. That is, the processing unit 100 of the control device 10D accepts setting/changing of the coefficient k from the user. The coefficient which is set can be recognized by the user. The value is displayed in the display unit 120 when the user operates the operation unit 122. The processing unit 100 of the control device 10D displays the value of the coefficient k which is set.

In the control device 10D according to the embodiment, the time constant of the target value filter 150 (filter time constant) conventionally fixed at the integration time constant $T_I$ of the PID control system can be freely set by the user without being fixed to the value of the integration time constant $T_I$. Consequently, more appropriate feedback control can be realized according to the control target.

H. Other Embodiments

As the first embodiment, the configuration of delaying the change rate in a target value that has been subjected to filtering which is output from the target value filter 150 in accordance with the change amount of the target value has been described. As the second embodiment, the configuration of delaying the change rate in a target value that has been subjected to filtering which is output from the target value filter 150 in accordance with a fact that a determined manipulated value deviates or approaches a predetermined permissible range has been described. In addition, a configuration employing the target value filter adjusting unit 190 as illustrated in Fig. 7 and capable of executing the first and second embodiments may be employed.

In the first to third embodiments, the user (or an external setting section) may arbitrarily set/change the time constant Tf of the target value filter 150. The operation of setting/changing the time constant Tf is performed via the operation unit 122. That is, the control device 10 may include a setting section which accepts setting/changing of the time constant Tf of the target value filter 150 or the user may recognize the time constant Tf of the target value filter 150 which is set. The recognizing operation is performed as follows. The user operates the operation unit 122 to display the value in the display unit 120. That is, the control device 10 may include a display section which displays the value of the time constant Tf which is set.

For convenience of explanation, the feedback control system on temperature adjustment has been described above. The feedback control system according to the embodiments may be applied not only to a heating furnace but also to various control targets in which the manipulated value is saturated. For example, it can be applied to pressure control, flow rate control, level control, velocity control, position control, and the like.

Although the configuration example of realizing the above-described processes when the processor executes a program has been described above, the invention may be realized by using a dedicated integration circuit such as an ASIC (Application Specific Integrated Circuit) including the processing unit 100 of the control device 10 and its peripheral circuits. The present invention does not limit the embodiments of the control device 10.

As will be appreciated by one skilled in the art, aspects of the present invention may be embodied as an apparatus, a method or a computer program (or computer program product). Accordingly, aspects of the present invention may take the form of an entirely hardware embodiment, an entirely software embodiment (including firmware, resident software, micro-code, etc.) or an embodiment combining software and hardware aspects. Furthermore, aspects of the present invention may take the form of a computer program product embodied in one or more computer readable medium(s) having computer readable program code embodied thereon. Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

It is to be noted that the embodiments disclosed here are illustrative and not restrictive in all of aspects. The scope of the present invention is defined by the scope of claims rather than by the above description, and all changes that fall within the scope of claims or equivalence are intended to be included.

The disclosure of the invention includes the aspects laid down below, which are part of the description but not part of the claims in accordance with the decision J15/88 of the Board of Appeal.

[1.] A feedback control method for determining a manipulated value to be output to a control target so that a process value obtained from the control target matches a target value, the feedback control method comprising:

a step of filtering the target value with a filter having a low-pass characteristic;
a step of determining the manipulated value in accordance with a deviation between the target value that has been filtered and the process value; and
a step of calculating a filter time constant as a time constant of the filter by
filter time constant = integration time constant $T_I$ × coefficient k
in relation to a coefficient k and an integration time constant $T_I$ of a control system comprising an integration element for determining the manipulated value.

[2.] The feedback control method according to aspect 1, further comprising a step of accepting setting/changing of the coefficient k.

[3.] The feedback control method according to aspect 1 or 2, further comprising a step of displaying a value of the coefficient k which is set.

[4.] A feedback control apparatus for determining a manipulated value to be output to a control target so that a process value obtained from the control target matches a target value, the feedback control apparatus comprising:

a filter configured to filter the target value and having a low-pass characteristic;

a control unit configured to determine the manipulated value in accordance with a deviation between the target value that has been filtered and the process value; and

a setting section configured to calculate a filter time constant as a time constant of the filter by

filter time constant = integration time constant $T_I$ × coefficient k

in relation to a coefficient k and an integration time constant $T_I$ of a control system comprising an integration element for determining the manipulated value.

[5.] The feedback control apparatus according to aspect 4, wherein the setting section accepts setting/changing of the coefficient k.

[6.] The feedback control apparatus according to aspect 4 or 5, wherein the setting section displays a value of the coefficient k which is set.

[7.] Computer program comprising a program code for executing the method of aspect 1 when run on at least one computer.

[8.] A feedback control method for determining a manipulated value to be output to a control target so that a process value obtained from the control target matches a target value, the feedback control method comprising:

a step of filtering the target value with a filter having a low-pass characteristic;

a step of determining the manipulated value in accordance with a deviation between the target value that has been filtered and the process value; and

a step of delaying change rate of the target value that has been filtered in accordance with at least one of a fact that the target value is changed and a fact that the determined manipulated value deviates from a predetermined permissible range or approaches the permissible range,

wherein the delaying step comprises a step of maintaining the target value that has been filtered at a value before the deviation while the determined manipulated value deviates from the permissible range.

[9.] A feedback control method for determining a manipulated value to be output to a control target so that a process value obtained from the control target matches a target value, the feedback control method comprising:

a step of filtering the target value with a filter having a low-pass characteristic;

a step of determining the manipulated value in accordance with a deviation between the target value that has been filtered and the process value; and

a step of delaying change rate of the target value that has been filtered in accordance with at least one of a fact that the target value is changed and a fact that the determined manipulated value deviates from a predetermined permissible range or approaches the permissible range,

wherein the delaying step comprises a step of detecting approach to the permissible range based on the change rate of the determined manipulated value and allowance for limit of the permissible range.

**Claims**

1. A feedback control method for determining a manipulated value to be output to a control target so that a process value obtained from the control target matches a target value, the feedback control method comprising:

a step of filtering the target value with a filter having a low-pass characteristic;

a step of determining the manipulated value in accordance with a deviation between the target value that has been filtered and the process value; and

a step of delaying change rate of the target value that has been filtered in accordance with at least one of a fact that the target value is changed and a fact that the determined manipulated value deviates from a predetermined permissible range or approaches the permissible range.

2. The feedback control method according to claim 1, wherein in the delaying step, when the target value is changed, a time constant of the filter is made longer in accordance with size of a change amount of the target value.

3. The feedback control method according to claim 2, further comprising a step of accepting setting/changing of the time constant of the filter.

4. The feedback control method according to claim 3, further comprising a step of displaying a value of the time constant of the filter that is set.

5. The feedback control method according to any one of claims 1 to 4, wherein in the delaying step, even in the case where the target value is changed, when the change amount of the target value is smaller than a predetermined value, the time constant of the filter is maintained.

6. The feedback control method according to any of claims 1 to 5, wherein the delaying step comprises a step of suppressing change rate of the target value that has been filtered while the determined manipulated value deviates from the permissible range.

7. A feedback control apparatus for determining a manipulated value to be output to a control target so that a process value obtained from the control target matches a target value, the feedback control apparatus comprising:

   a filter configured to filter the target value and having a low-pass characteristic;
   a control unit configured to determine the manipulated value in accordance with a deviation between the target value that has been filtered and the process value; and
   an adjusting unit configured to delay change rate of the target value that has been filtered in accordance with at least one of a fact that the target value is changed and a fact that the determined manipulated value deviates from a predetermined permissible range or approaches the permissible range.

8. The feedback control apparatus according to claim 7, wherein when the target value is changed, the adjusting unit causes a time constant of the filter to be longer in accordance with size of the change amount of the target value.

9. The feedback control apparatus according to claim 8, further comprising a setting section configured to accept setting/changing of the time constant of the filter.

10. The feedback control apparatus according to claim 9, further comprising a display section configured to display a value of the time constant of the filter that is set.

11. The feedback control apparatus according to any one of claims 7 to 10, wherein even in the case where the target value is changed, when the change amount of the target value is smaller than a predetermined value, the adjusting unit is configured to maintain the time constant of the filter.

12. The feedback control apparatus according to any of claims 7 to 11, wherein the adjusting unit is configured to suppress change rate of the target value that has been filtered while the determined manipulated value deviates from the permissible range.

13. The feedback control apparatus according to any of claims 7 to 12, wherein the adjusting unit is configured to maintain the target value that has been filtered at a value before the deviation while the determined manipulated value deviates from the permissible range.

14. The feedback control apparatus according to any of claims 7 to 13, wherein the adjusting unit is configured to detect approach to the permissible range based on the change rate of the determined manipulated value and allowance for limit of the permissible range.

15. A feedback control program for determining a manipulated value to be output to a control target so that a process value obtained from the control target matches a target value, the feedback control program causing a computer to execute:

   a step of filtering the target value with a filter having a low-pass characteristic;
   a step of determining the manipulated value in accordance with a deviation between the target value that has been filtered and the process value; and

a step of delaying change rate of the target value that has been filtered in accordance with at least one of a fact that the target value is changed and a fact that the determined manipulated value deviates from a predetermined permissible range or approaches the permissible range.

# FIG. 1

## FIG. 2

User operation   External device

Operation unit ~122   Communication interface ~124

SV↓ SV↓

Processing unit ~100

Processor ~102

Memory ~104

Program module ~106

Temperature sensor 6 → PV → Input circuit ~110 → A/D converter ~112 → → D/A converter ~114 → Output circuit ~116 → MV → Control target (SSR)

Display unit ~120

10

EP 2 725 434 A1

*FIG. 3*

FIG. 4

Control device ← — — — — — — — — — — — — — — — — — — — — → | Process →

Target value filter F(s) | PI control C(s)

SV → $\dfrac{1+\alpha\,T_I s}{1+T_I s}$ 150 → SV' → ⊕ 162 $\begin{array}{c}+\\-\end{array}$ → $K_P\left(1+\dfrac{1}{T_I s}\right)$ 164 → MV → P(s) Control target →

160

PV

EP 2 725 434 A1

# FIG. 5

*FIG. 6A*

*FIG. 6B*

*FIG. 7*

t1

Target value
(SV)

SV1

$\Delta$SV1

SV0

Time

Time constant
(Tf)

Tf1

Tf0

Time

Filter output
value

Tf0

Suppress

Tf1

Time

t1

Target value
(SV)

SV2

$\Delta$SV2

SV0

Time

Time constant
(Tf)

Tf2

Tf1

Tf0

Time

Filter output
value

Tf0

Suppress

Tf2

Time

EP 2 725 434 A1

## FIG. 9A

Target value filter
Time constant correction coefficient β

Target value change width
ΔSV/proportional band Pb

## FIG. 9B

Target value filter
Time constant [sec]

Target value change width [°C]

*FIG. 10*

[°C]/[%]

*FIG. 11*

Target value filter
Time constant [sec]

Target value change width [°C]

## FIG. 12

```
                    ┌─────────────────────┐
                    │  Feedback control   │
                    └─────────────────────┘
                              │            ⟋S100
                              ▼
        ┌──────────────────────────────────────────┐
        │   Obtain target value in computation      │
        │            cycle of this time             │
        └──────────────────────────────────────────┘
                              │            ⟋S102
                              ▼                          NO
               ◁───────────────────────────▷────────────────┐
                     Target value changed?                   │
                              │ YES        ⟋S104             │
                              ▼                               │
        ┌──────────────────────────────────────────┐         │
        │ Calculate change width of target value from│        │
        │ difference between target value in computation│     │
        │   cycle of last time and target value in   │        │
        │       computation cycle of this time       │        │
        └──────────────────────────────────────────┘         │
                              │            ⟋S106             │
                              ▼                               │
        ┌──────────────────────────────────────────┐         │
        │  Determine new time constant of target value│       │
        │  filter according to calculated change width of│    │
        │              target value                  │        │
        └──────────────────────────────────────────┘         │
                              │◄─────────────────────────────┘
                              │            ⟋S108
                              ▼
        ┌──────────────────────────────────────────┐
        │      Store target value in computation     │
        │            cycle of this time              │
        └──────────────────────────────────────────┘
                              │            ⟋S110
                              ▼
        ┌──────────────────────────────────────────┐
        │ Calculate target value subjected to filtering in│
        │  computation cycle of this time from target│
        │  value in computation cycle of this time and│
        │   target value subjected to filtering in   │
        │       computation cycle of last time       │
        └──────────────────────────────────────────┘
                              │            ⟋S112
                              ▼
        ┌──────────────────────────────────────────┐
        │ Store target value subjected to filtering in│
        │       computation cycle of this time       │
        └──────────────────────────────────────────┘
                              │            ⟋S114
                              ▼
        ┌──────────────────────────────────────────┐
        │     Obtain process value in computation    │
        │            cycle of this time              │
        └──────────────────────────────────────────┘
                              │            ⟋S116                    ┌──────────────────────┐
                              ▼                                     │            ⟋S120      │
        ┌──────────────────────────────────────────┐     ┌──────────────────────────┐
        │ Calculate deviation from difference between│     │   Output calculated       │
        │     target value subjected to filtering in │     │  manipulated value to     │
        │  computation cycle of this time and process│     │     control target        │
        │   value in computation cycle of this time  │     └──────────────────────────┘
        └──────────────────────────────────────────┘                  │      ⟋S122
                              │            ⟋S118                      ▼
                              ▼                               ┌──────────────────────────┐
        ┌──────────────────────────────────────────┐         │    Store calculated      │
        │  Calculate manipulated value in computation│         │   manipulated value      │
        │ cycle of this time from deviation in computation│    └──────────────────────────┘
        │ cycle of this time and manipulated value in│                  │
        │       computation cycle of last time       │                  ▼
        └──────────────────────────────────────────┘           ┌──────────────┐
                              │                                 │    Return    │
                              └─────────────────────────────────└──────────────┘
```

FIG. 13A

Manipulated value (MV)

FIG. 13B

Time constant (Tf)

FIG. 13C

Filter output value

FIG. 13D

Filter output value

## FIG. 14

## FIG. 15

# FIG. 16

```
                    ┌──────────────────────────┐
                    │    Feedback control      │
                    └──────────────────────────┘
                                 │
                                 ▼                    ┌─S200
        ┌──────────────────────────────────────────────────┐
        │  Obtain target value in computation cycle of this time │
        └──────────────────────────────────────────────────┘
                                 │
                                 ▼                    ┌─S202
        ┌──────────────────────────────────────────────────┐
        │     Store obtained target value in computation    │
        │              cycle of this time                   │
        └──────────────────────────────────────────────────┘
                                 │
                                 ▼                    ┌─S204
        ┌──────────────────────────────────────────────────┐
        │ Obtain manipulated value in computation cycle of last time │
        └──────────────────────────────────────────────────┘
                                 │
                                 ▼         ┌─S206
                   ╱───────────────────────────╲
          NO      ╱  Manipulated value in computation ╲    YES
        ◄────────╱   cycle of last time deviated from   ╲────────►
                 ╲        permissible range?            ╱
        S208      ╲───────────────────────────────────╱       S210
          │                                                     │
          ▼                                                     ▼
  ┌──────────────────────┐                      ┌──────────────────────┐
  │   Calculate target value │                  │   Calculate target value │
  │    subjected to filtering in │              │    subjected to filtering in │
  │ computation cycle of this time │            │ computation cycle of this time │
  │      by using standard time    │            │    by using longer time constant │
  │  constant of target value filter │          │                          │
  └──────────────────────┘                      └──────────────────────┘
          │                                                     │
          └──────────────────────┬──────────────────────────────┘
                                 ▼                    ┌─S212
        ┌──────────────────────────────────────────────────┐
        │  Store target value subjected to filtering in     │
        │           computation cycle of this time          │
        └──────────────────────────────────────────────────┘
                                 │
                                 ▼                    ┌─S214
        ┌──────────────────────────────────────────────────┐
        │     Obtain process value in computation           │
        │              cycle of this time                   │
        └──────────────────────────────────────────────────┘
                                 │
                                 ▼                    ┌─S216
        ┌──────────────────────────────────────────────────┐
        │  Calculate deviation from difference between      │
        │ target value subjected to filtering in computation │
        │  cycle of this time and process value in          │
        │           computation cycle of this time          │
        └──────────────────────────────────────────────────┘
                                 │
                                 ▼                    ┌─S218
        ┌──────────────────────────────────────────────────┐
        │  Calculate manipulated value in computation       │
        │ cycle of this time from deviation in computation  │
        │   cycle of this time and manipulated value in     │
        │           computation cycle of last time          │
        └──────────────────────────────────────────────────┘
                                 │
                                 ▼                    ┌─S220
        ┌──────────────────────────────────────────────────┐
        │      Output calculated manipulated value          │
        │               to control object                   │
        └──────────────────────────────────────────────────┘
                                 │
                                 ▼                    ┌─S222
        ┌──────────────────────────────────────────────────┐
        │        Store calculated manipulated value         │
        └──────────────────────────────────────────────────┘
                                 │
                                 ▼
                    ┌──────────────────────────┐
                    │         Return           │
                    └──────────────────────────┘
```

Europäisches
Patentamt

European
Patent Office

Office européen
des brevets

**EUROPEAN SEARCH REPORT**

Application Number

EP 13 18 5896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/189898 A1 (MUROI KAZUSHIGE [JP]) 1 September 2005 (2005-09-01) * paragraph [0053]; figure 5 * ----- | 1,7,15 | INV. G05B5/01 |
| A | WO 93/09481 A1 (FOXBORO CO [US]) 13 May 1993 (1993-05-13) * figure 3 * ----- | 1,7,15 | |

TECHNICAL FIELDS
SEARCHED     (IPC)

G05B

The present search report has been drawn up for all claims

| Place of search | Date of completion of the search | Examiner |
|---|---|---|
| The Hague | 11 December 2013 | Kelperis, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 13 18 5896

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2013

| Patent document cited in search report | Publication date | Patent family member(s) | Publication date |
|---|---|---|---|
| US 2005189898 A1 | 01-09-2005 | JP 4093191 B2<br>JP 2005245130 A<br>US 2005189898 A1 | 04-06-2008<br>08-09-2005<br>01-09-2005 |
| WO 9309481 A1 | 13-05-1993 | JP 3470197 B2<br>JP H07503082 A<br>WO 9309481 A1 | 25-11-2003<br>30-03-1995<br>13-05-1993 |

EPO FORM P0459

For more details about this annex : see Official Journal of the European Patent Office, No. 12/82